# DEMANDE DE BREVET EUROPEEN

(11) **EP 3 176 192 A1**
(43) Date de publication de la demande: **07.06.2017**
(21) Numéro de dépôt: 16200918.7
(22) Date de dépôt: 28.11.2016
(51) Int. Cl.: C08F 263/04, H01B 3/44, C08L 31/04, C08K 5/00, C08K 5/14, C08K 5/54

(54) **COMPOSITION POUR FABRICATION D'UNE COUCHE D'UN CABLE ET CABLE COMPRENANT UNE TELLE COUCHE**

(30) Priorité: 01.12.2015 FR 1561624
(71) Demandeur: Silec Cable, 77876 Montereau Fault Yonne (FR)
(72) Inventeur: DEDRIE, Lionel, 77130 MONTEREAU-FAULT-YONNE (FR); DENIZET, Isabelle, 77940 LA BROSSE MONTCEAUX (FR); MAMMERI, Mohamed, 89100 PARON (FR)
(74) Mandataire: Decorchemont, Audrey Véronique Christèle

(57) **Abrégé**

L'invention concerne une composition pour la fabrication d'une couche d'un câble comprenant une matrice polymère comprenant au moins deux éthylène acétate de vinyle (EVA) à teneur en acétate de vinyle supérieure ou égale à 50%, un agent silane de réticulation, un agent peroxyde d'amorçage de greffage de l'agent silane sur la matrice polymère, la composition comprenant moins de 2 parts en poids d'agent peroxyde pour cents parts de la matrice polymère et entre 3 à 30 parts en poids d'agent silane pour cents parts de la matrice polymère.

## Description

L'invention concerne une composition pour la fabrication d'une couche d'un câble. L'invention concerne plus particulièrement, bien que non exclusivement, une composition pour la fabrication d'une couche d'un câble de télécommunication ou de transport d'énergie tel qu'un câble de transport d'énergie électrique.

L'invention concerne également un câble comprenant une telle couche.

### ARRIERE PLAN TECHNOLOGIQUE DE L'INVENTION

Les câbles de transport d'énergie ou de télécommunication comprennent généralement au moins trois couches à savoir un conducteur électrique central, entouré d'un isolant électrique intermédiaire, lui-même protégé du milieu extérieur par une gaine externe de protection.

Or pour certaines applications les gaines externes doivent répondre à des normes strictes et doivent en particulier être souples, ignifuges, sans halogène et résistantes aux huiles.

Pour obtenir ces gaines externes, il est ainsi connu de partir d'une matrice comprenant un ou des polymères à base d'éthylène acétate de vinyle (EVA) à teneur relativement élevée en acétate de vinyle que l'on mélange à du peroxyde. On provoque ensuite une réticulation peroxyde dudit mélange pour obtenir la gaine.

La réticulation peroxyde permet d'obtenir une gaine relativement souple et résistante aux huiles car cette voie de réticulation permet notamment d'obtenir un degré de réticulation élevé de la matrice polymère.

Toutefois, ce procédé de fabrication impose que le mélange matrice et peroxyde traverse une enceinte chauffée sous pression pour que la réticulation peroxyde puisse avoir lieu ce qui complexifie grandement ledit procédé.

En outre, le reste des couches du câble doit présenter des propriétés particulières pour ne pas se déformer dans l'enceinte le temps que la gaine externe soit réticulée à chaud sous pression. Par exemple, les isolants intermédiaires doivent être surdimensionnés en épaisseur ou encore être composés de matériaux particuliers résistants à la déformation sous pression à chaud.

Ceci complexifie le procédé de fabrication du câble et en augmente donc le coût.

Par ailleurs, il n'est pas possible d'employer ce procédé lorsque le câble comporte certains types de couches dont on ne sait pas encore éviter ou limiter la déformation le temps que la gaine externe soit réticulée à chaud sous pression. C'est notamment le cas lorsque l'une des couches internes du câble est composée d'une armure ou d'une tresse métallique.

### OBJET DE L'INVENTION

Un but de l'invention est de proposer une composition pour la fabrication d'une couche d'un câble qui permette de faciliter la fabrication de ladite couche.

Un but de l'invention est également de proposer un câble comprenant une telle couche.

### BREVE DESCRIPTION DE L'INVENTION

En vue de la réalisation de ce but, on propose une composition pour la fabrication d'une couche d'un câble tel qu'un câble de télécommunication ou de transport d'énergie, la composition comprenant au moins :
- une matrice polymère comprenant au moins deux éthylène acétate de vinyle (EVA) chacun à teneur en acétate de vinyle supérieure ou égale à 50%,
- un agent silane de réticulation,
- un agent peroxyde d'amorçage de greffage de l'agent silane sur la matrice polymère,
   la composition comprenant moins de 2 parts en poids d'agent peroxyde pour cents parts de la matrice polymère et entre 3 à 30 parts en poids d'agent silane pour cents parts de la matrice polymère.

L'invention permet ainsi de travailler en réticulation silane pour créer la couche de câble, la réticulation de la matrice polymère par voie silanique s'amorçant grâce à la présence de l'agent peroxyde d'amorçage du greffage, introduit avec l'agent silane. Il n'est ainsi pas nécessaire de travailler dans des enceintes sous pression pour provoquer la réticulation ce qui simplifie grandement le procédé de fabrication de la couche.

De plus, la matrice polymère présentant une teneur importante en acétate de vinyle, la couche obtenue à partir de l'invention présente de bonnes caractéristiques notamment en termes de résistance à l'huile et aux hydrocarbures et en termes de souplesse. La couche est également exempte d'halogène.

L'invention permet donc d'obtenir une couche présentant de bonnes caractéristiques avec un procédé relativement simple.

Les inventeurs ont ainsi pu fabriquer un câble comprenant une gaine externe formée à partir de l'invention qui respecte les normes existantes en vigueur au moment du dépôt de la présente demande pour les applications offshores à savoir les normes IEC 60092-360 et NEK TS 606 : 2009. Bien entendu cette application n'est pas limitative et la composition selon l'invention peut servir à fabriquer les couches de câbles pour de nombreuses autres applications.

On note que l'invention permet de travailler uniquement en réticulation silane. Le peroxyde n'agit uniquement qu'en tant que générateur de radicaux libres, ce qui amorce le greffage du silane dans la matrice polymère et ainsi permet la réticulation silane du polymère. La couche formée à partir de l'invention comprend ainsi des ponts siloxanes, alors que dans le cas d'une réticulation peroxyde de l'art antérieur, les ponts formés sont de nature carbone-carbone.

Pour la présente demande, la teneur en acétate de vinyle d'un EVA correspond au rapport du poids de fonctions acétate de vinyle sur le poids total dudit EVA.

Selon un mode de réalisation particulier, pour cents parts de la matrice polymère, la matrice polymère comporte entre 50 et 100 parts en poids d'au moins les deux EVA à teneur en acétate de vinyle supérieure ou égale à 50%.

Selon un mode de réalisation particulier, au moins un des deux EVA est un EVA à teneur en acétate de vinyle supérieure ou égale à 60%.

Selon un mode de réalisation particulier, au moins les deux EVA sont des EVA à teneur en acétate de vinyle supérieure ou égale à 60%.

Selon un mode de réalisation particulier, les deux EVA de la matrice polymère sont un premier EVA à teneur en acétate de vinyle supérieure ou égale à 50% et un deuxième EVA à teneur en acétate de vinyle supérieure ou égale à 60%, un rapport massique du premier EVA sur le deuxième EVA étant strictement inférieur à 1 (soit le rapport entre, pour cent parts de la matrice polymère, la part en poids du premier EVA sur la part en poids du deuxième EVA).

De la sorte, la matrice polymère présente une teneur très importante en acétate de vinyle ce qui permet à la couche ainsi obtenue de présenter de bonnes caractéristiques notamment en termes de résistance à l'huile (telles que les huiles de forage comme les huiles aromatiques, paraffinique et naphténique) et aux hydrocarbures.

Selon un mode de réalisation particulier, l'agent silane comporte un organosilane.

Selon un mode de réalisation particulier, l'organosilane est choisi parmi un vinylsilane, un alkylsilane ou un vinylsiloxane.

Selon un mode de réalisation particulier, la composition comporte, pour cents parts de la matrice polymère, entre 3 à 15 parts en poids d'agent silane.

Selon un mode de réalisation particulier, la composition comporte, pour cents parts de la matrice polymère, entre 5 et 15 parts en poids d'agent silane.

Selon un mode de réalisation particulier, l'agent silane comporte un oligomère d'organosilane.

Selon un mode de réalisation particulier, l'agent peroxyde comporte un composé choisi parmi la liste suivante : peroxyde de dicumyl, Tertbutylperoxy-3,5,5-trimethyl hexanoate, di(terbutyl peroxyisopropyl) benzène ou 2,5-diméthyl-2,5-di-(tert.-butyl-peroxy)hexane.

Selon un mode de réalisation particulier, la composition comporte, pour cents parts de la matrice polymère, entre 0.1 et moins de 2 parts en poids d'agent peroxyde.

Selon un mode de réalisation particulier, la composition comporte, pour cents parts de la matrice polymère, entre 0.3 et 1 part en poids d'agent peroxyde.

Selon un mode de réalisation particulier, la composition comporte, pour cents parts de la matrice polymère, moins de 1 part en poids d'agent peroxyde.

Selon un mode de réalisation particulier, la composition comporte en outre au moins un composé ignifugeant, la composition comportant, pour cents parts de la matrice polymère, entre 80 à 200 parts en poids dudit composé ignifugeant.

Selon un mode de réalisation particulier, la composition comporte, pour cents parts de la matrice polymère, entre 90 à 190 parts en poids dudit composé ignifugeant.

Selon un mode de réalisation particulier, le rapport en poids de parts d'agent silane sur parts d'agent peroxyde, pour cents parts de la matrice polymère, est en outre compris entre 5 et 33.

Selon un mode de réalisation particulier, le rapport en poids de parts d'agent silane sur parts d'agent peroxyde, pour cents parts de la matrice polymère, est en outre compris entre 10 et 17.

On propose également un câble comprenant une couche fabriquée à partir de la composition précitée.

Selon un mode de réalisation particulier, ladite couche forme la gaine externe dudit câble.

### DESCRIPTION DETAILLEE DE L'INVENTION

La composition selon le mode de réalisation particulier de l'invention comporte une matrice polymère composée de deux EVA présentant chacun une teneur en acétate de vinyle supérieure ou égale à 50%. De préférence, les deux EVA sont tels qu'ils présentent chacun une teneur en acétate de vinyle supérieure ou égale à 60%. Pour cents parts de la matrice polymère, la matrice polymère comporte donc ici cents parts d'un mélange desdits deux EVA.

La composition comporte en outre un agent silane de réticulation. L'agent silane comporte ici un seul composé qui est à base de silane. De façon particulière, le composé est un organosilane. De préférence, ledit composé est un vinylsilane. De façon particulière, le vinylsilane est choisi dans la liste suivante : VTMO (pour Vinyltrimethoxysilane), VTMOEO (pour Vinyltris(2-methoxyethoxy)silane) ou VTEO (pour Triethoxyvinylsilane).

Ainsi, pour cents parts de la matrice polymère, la composition comporte entre 3 à 15 parts en poids d'agent silane. Préférentiellement, pour cents parts de la matrice polymère, la composition comporte entre 5 et 15 parts en poids d'agent silane.

Par ailleurs, la composition comporte un agent peroxyde d'amorçage de greffage de l'agent silane. L'agent peroxyde comporte ici un seul composé qui est à base de peroxyde. De façon particulière, ledit composé à base de peroxyde est choisi dans la liste suivante : peroxyde de dicumyl, TBPIN (pour Tertbutylperoxy-3,5,5-trimethyl hexanoate), di(terbutyl peroxyisopropyl) benzène ou 2,5-diméthyl-2,5-di-(tert.-butyl-peroxy) hexane.

Pour cents parts de la matrice polymère, la composition comporte moins de 2 parts en poids d'agent peroxyde. Préférentiellement, pour cents parts de la matrice polymère, la composition comporte entre 0.1 et moins de 2 parts en poids d'agent peroxyde.

De préférence encore, pour cents parts de la matrice polymère, la composition comporte moins de une part en poids d'agent peroxyde. De préférence, pour cents parts de la matrice polymère, la composition comporte entre 0.3 et 1 part en poids d'agent peroxyde.

La composition comporte en outre au moins un composé ignifugeant afin d'améliorer la résistance au feu de la couche fabriquée à partir de cette composition. Le composé ignifugeant comporte ici une ou plusieurs charges minérales. Lesdites charges sont par exemple à base de silice précipitée, d'hydroxyde de magnésium, d'hydroxyde d'aluminium ou encore de trioxyde d'antimoine (Sb₂O₃). Pour cents parts de la matrice polymère, la composition comporte de préférence entre 80 à 200 parts en poids du composé ignifugeant. Préférentiellement, pour cents parts de la matrice polymère, la composition comporte entre 90 à 190 parts en poids du composé ignifugeant.

En résumé, selon le mode de réalisation particulier de l'invention, la composition comporte, pour cents parts de de la matrice polymère :
- entre 5 et 15 parts en poids d'agent silane comprenant un seul composé à base de silane,
- entre 0.3 et 1 part en poids d'agent peroxyde comprenant un seul composé à base de peroxyde,
- entre 90 et 190 parts en poids du composé ignifugeant.

De préférence, on choisit en outre la composition de sorte que le rapport en poids de parts d'agent silane sur parts d'agent peroxyde, pour cents parts de la matrice polymère, soit compris entre 10 et 17.

Ceci permet d'avoir une réticulation de la matrice polymère de très bonne qualité.

Le procédé de fabrication de la couche va être à présent décrit.

La composition précitée est mélangée avant d'être extrudée. De par le chauffage, l'agent peroxyde et l'agent silane réagissent ce qui va entraîner le greffage de l'agent silane sur la matrice polymère. La réticulation s'effectue ici après l'ajout d'un catalyseur à l'extrusion, par chauffage en milieu humide.

On obtient ainsi une couche finale en un matériau réticulé conférant des propriétés intéressantes à ladite couche notamment en termes de souplesse et de résistance aux huiles et aux hydrocarbures.

La réticulation silane permet que l'extrusion soit mise en oeuvre par des outils ne nécessitant pas un travail sous pression.

Le mélange de la composition peut par exemple être créé dans un premier temps et d'éventuels autres charges ou additifs au cours de la fabrication de la couche au niveau du mélangeur et/ou de l'extrudeuse.

De préférence, la composition selon l'invention permet de former une gaine externe du câble ou une couche intermédiaire électriquement isolante dudit câble. Le câble est par exemple un câble tel qu'un câble de télécommunication ou de transport d'énergie. En effet, de par ses propriétés (souplesse, résistance aux hydrocarbures et ou huiles, résistance au feu, sans halogène ...) la couche formée par la composition de l'invention précitée s'avère très adaptée pour former une gaine externe ou une couche intermédiaire électriquement isolant pour des applications de télécommunication ou de transport d'énergie.

Bien entendu l'invention n'est pas limitée au mode de réalisation décrit et on pourra y apporter des variantes de réalisation sans sortir du cadre de l'invention tel que défini par les revendications.

Ainsi, bien qu'ici, la matrice polymère comporte deux EVA à teneur en acétate de vinyle supérieure ou égale à 50%, la composition pourra comporter un nombre différent d'EVA à teneur en acétate de vinyle supérieure ou égale à 50% à condition d'en comporter au moins deux. La matrice polymère pourra comporter d'autres composants supplémentaires différents de deux EVA à teneur en acétate de vinyle supérieure ou égale à 50% comme par exemple un EVA avec une teneur en acétate de vinyle inférieure à 50 % ou tout autre polymère tel qu'un polyoléfine. Les deux EVA de la matrice polymère pourront être un premier EVA à teneur en acétate de vinyle supérieure ou égale à 50% et un deuxième EVA à teneur en acétate de vinyle supérieure ou égale à 60%, un rapport massique du premier EVA sur le deuxième EVA étant strictement inférieur à 1.

Ainsi, de préférence, mais non limitativement, la matrice polymère sera telle que pour 100 parts de la matrice polymère, la matrice polymère comprendra entre 50 et 100 parts en poids d'EVA à teneur en acétate de vinyle supérieure ou égale à 50%.

Bien qu'ici l'agent silane comporte un seul composé à base de silane, l'agent silane pourra comporter plus de composés à base de silane. L'agent silane pourra ainsi comporter plusieurs vinylsilanes. En outre, l'agent silane pourra comporter en complément ou en remplacement de l'un ou des vinylsilanes d'autres organosilanes à base de silane tels qu'un ou plusieurs alkylsilane et/ou un ou plusieurs polymères de vinylsiloxane. En outre, l'agent silane pourra comporter en complément ou en remplacement de l'un des organosilanes précités d'autres composés à base de silane tels que les oligomères d'organosilanes. Dans ce cas, la composition comprendra de préférence mais non limitativement, pour cents parts de la matrice polymère, entre 5 et 20 parts en poids d'agent silane. L'agent silane ne comportera dans tous les cas que des composés à base de silane.

De même, bien qu'ici l'agent peroxyde comporte un seul composé à base de peroxyde, l'agent peroxyde pourra comporter plus de composés à base de peroxyde. L'agent peroxyde ne comportera dans tous les cas que des composés à base de peroxyde.

La composition pourra également comporter plusieurs composés ignifugeants et/ou d'autres composés supplémentaires autres qu'un composé ignifugeant comme un ou des composés stabilisateurs, un ou des catalyseurs.

## Revendications

1. Composition pour la fabrication d'une couche d'un câble tel qu'un câble de télécommunication ou de transport d'énergie, la composition comprenant au moins :
- une matrice polymère comprenant au moins deux éthylène acétate de vinyle (EVA), chacun à teneur en acétate de vinyle supérieure ou égale à 50%,
- un agent silane de réticulation,
- un agent peroxyde d'amorçage de greffage de l'agent silane sur la matrice polymère,
la composition comprenant moins de 2 parts en poids d'agent peroxyde pour cents parts de la matrice polymère et entre 3 à 30 parts en poids d'agent silane pour cents parts de la matrice polymère.

2. Composition selon la revendication 1, dans laquelle, pour cents parts de la matrice polymère, la matrice polymère comporte entre 50 et 100 parts en poids d'au moins les deux EVA à teneur en acétate de vinyle supérieure ou égale à 50%.

3. Composition selon la revendication 1 ou la revendication 2, dans laquelle au moins un des deux EVA est un EVA à teneur en acétate de vinyle supérieure ou égale à 60%.

4. Composition selon l'une des revendications précédentes, dans lequel au moins les deux EVA sont des EVA à teneur en acétate de vinyle supérieure ou égale à 60%.

5. Composition selon l'une des revendications précédentes, dans laquelle les deux EVA de la matrice polymère sont un premier EVA à teneur en acétate de vinyle supérieure ou égale à 50% et un deuxième EVA à teneur en acétate de vinyle supérieure ou égale à 60%, un rapport massique du premier EVA sur le deuxième EVA étant strictement inférieur à 1.

6. Composition selon l'une des revendications précédentes, dans laquelle l'agent silane comporte un organosilane.

7. Composition selon la revendication 6, dans laquelle l'organosilane est choisi parmi un vinylsilane, un alkylsilane ou un vinylsiloxane.

8. Composition selon l'une des revendications 6 ou 7, dans laquelle la composition comporte, pour cents parts de la matrice polymère, entre 3 à 15 parts en poids d'agent silane.

9. Composition selon la revendication 8, dans laquelle la composition comporte, pour cents parts de la matrice polymère, entre 5 et 15 parts en poids d'agent silane.

10. Composition selon l'une des revendications précédentes, dans laquelle l'agent silane comporte un oligomère d'organosilane.

11. Composition selon l'une des revendications précédentes, dans laquelle l'agent peroxyde comporte un composé choisi parmi la liste suivante : peroxyde de dicumyl, Tertbutylperoxy-3,5,5-trimethyl hexanoate, di(terbutyl peroxyisopropyl) benzène ou 2,5-diméthyl-2,5-di-(tert.-butyl-peroxy) hexane.

12. Composition selon l'une des revendications précédentes, dans laquelle la composition comporte, pour cents parts de la matrice polymère, entre 0.1 et moins de 2 parts en poids d'agent peroxyde.

13. Composition selon la revendication 12, dans laquelle la composition comporte, pour cents parts de la matrice polymère, entre 0.3 et 1 part en poids d'agent peroxyde.

14. Composition selon l'une des revendications 12 ou 13, dans laquelle la composition comporte, pour cents parts de la matrice polymère, moins de 1 part en poids d'agent peroxyde.

15. Composition selon l'une des revendications précédentes, comportant en outre au moins un composé ignifugeant, la composition comportant, pour cents parts de la matrice polymère, entre 80 à 200 parts en poids dudit composé ignifugeant.

16. Composition selon la revendication 15, dans laquelle la composition comporte, pour cents parts de la matrice polymère, entre 90 à 190 parts en poids dudit composé ignifugeant.

17. Composition selon l'une des revendications précédentes, dans laquelle le rapport en poids de parts d'agent silane sur parts d'agent peroxyde, pour cents parts de la matrice polymère, est en outre compris entre 5 et 33.

18. Composition selon la revendication 17, dans laquelle le rapport en poids de parts d'agent silane sur parts d'agent peroxyde, pour cents parts de la matrice polymère, est en outre compris entre 10 et 17.

19. Câble comprenant une couche fabriquée à partir de la composition selon l'une des revendications 1 à 18.

20. Câble selon la revendication 19, dans lequel ladite couche forme la gaine externe dudit câble.
